Europäisches Patentamt

European Patent Office

Office européen des brevets

(19)

(11) **EP 1 422 816 A1**

(12) ## DEMANDE DE BREVET EUROPEEN

(43) Date de publication:
**26.05.2004 Bulletin 2004/22**

(51) Int Cl.⁷: **H02M 3/335**

(21) Numéro de dépôt: **03356186.1**

(22) Date de dépôt: **24.11.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **25.11.2002 FR 0214748**

(71) Demandeur: **Alstom**
**75116 Paris (FR)**

(72) Inventeurs:
- **Belin, Sébastien**
 **65800 Aureilhan (FR)**
- **Boyer, Michel**
 **65000 Tarbes (FR)**
- **Debruyne, Marc**
 **65100 Bartres (FR)**

(74) Mandataire: **Myon, Gérard et al**
**Cabinet Lavoix,**
**62, rue de Bonnel**
**69448 Lyon Cédex 03 (FR)**

(54) **Procédé et système de commande d'un ensemble de transformateurs indépendants magnétiquement les uns des autres, et support d'enregistrement d'informations comportant des instructions pour l'exécution du procédé**

(57) Ce procédé de commande d'un ensemble (2) de transformateurs ($T_i$) indépendants magnétiquement les uns des autres comporte au moins une étape (132, 138, 168, 170) d'exécution d'un processus (134, 140, 172) de commutation douce pour commander la commutation d'un interrupteur commandable dudit ensemble. Ce processus comporte une opération de commande de la commutation de l'interrupteur, à un instant où un paramètre de fonctionnement de l'interrupteur s'est naturellement annulé, ce paramètre de fonctionnement étant choisi parmi l'intensité du courant traversant l'interrupteur à commuter et la tension aux bornes de l'interrupteur à commuter.

**FIG.1**

EP 1 422 816 A1

**Description**

L'invention concerne un procédé et un système de commande d'un ensemble de transformateurs indépendants magnétiquement les uns des autres ainsi qu'un support d'enregistrement d'informations comportant des instructions pour l'exécution du procédé.

Plus précisément, le procédé et le système concernent des ensembles comportant un premier et un second circuits électriques raccordant entre eux respectivement les enroulements primaires et secondaires des transformateurs par l'intermédiaire d'interrupteurs commandables propres à raccorder ces enroulements primaires et secondaires soit en parallèle, soit en série.

De tels ensembles de transformateurs sont connus sous les termes de convertisseurs SPARC (Serial and Parallel Auto-Regulated Configuration). Un tel convertisseur SPARC et un procédé de commande de ce convertisseur sont décrits dans la demande de brevet française publiée sous le numéro FR-A-2 820 861 .

Dans les procédés connus, l'instant de commutation est uniquement déterminé de manière à ce que le convertisseur SPARC présente un rapport de transformation global souhaité sans tenir compte des possibles pertes par commutation des interrupteurs. Ainsi, dans les procédés connus, les pertes par commutation des interrupteurs sont importantes.

L'invention vise à remédier à cet inconvénient en proposant un procédé de commande d'un ensemble de transformateurs, tel que décrit ci-dessus, dans lequel les pertes par commutation des interrupteurs sont presque annulées.

L'invention a donc pour objet un procédé de commande d'un ensemble de transformateurs indépendants magnétiquement les uns des autres, caractérisé en ce qu'il comporte au moins une étape d'exécution d'un processus de commutation douce pour commander la commutation d'un desdits interrupteurs commandables, ledit processus comportant une opération de commande de la commutation de l'interrupteur, à un instant où un paramètre de fonctionnement de l'interrupteur s'est naturellement annulé, ce paramètre de fonctionnement étant choisi parmi l'intensité du courant traversant l'interrupteur à commuter et la tension aux bornes de l'interrupteur à commuter.

Dans le procédé ci-dessus, la commutation de certains des interrupteurs est douce, c'est-à-dire qu'elle n'est commandée que lorsque la tension aux bornes de l'interrupteur à fermer ou bien l'intensité du courant traversant l'interrupteur à ouvrir est nulle avant même que l'on commande sa fermeture ou son ouverture. Les pertes par commutation sont proportionnelles au produit de la tension par l'intensité du courant qui traverse l'interrupteur au moment où la commutation est commandée. Par conséquent, lorsque la commutation d'un interrupteur est douce, les pertes de commutation sont presque nulles. Ainsi, le procédé de commande décrit ci-dessus limite les pertes par commutation puisqu'il réalise un processus de commutation douce pour certains des interrupteurs de l'ensemble.

Suivant d'autres caractéristiques du procédé conforme à l'invention :

- ladite au moins une étape d'exécution d'un processus de commutation douce est uniquement réalisée à un instant où les conditions de fonctionnement dudit ensemble sont propres à permettre une annulation naturelle du paramètre de fonctionnement de l'interrupteur à commuter ;
- le processus de commutation douce comporte une opération consistant à commander au moins un autre interrupteur que celui à commuter de manière à déclencher un processus d'annulation naturelle du paramètre de fonctionnement de l'interrupteur à commuter ;
- au moins l'un des circuits électriques comportant un étage élémentaire formé par un circuit électrique fermé dans lequel sont placés, dans l'ordre, un premier enroulement, un premier interrupteur commandable, un second enroulement, et un second interrupteur commandable, le procédé comporte une étape d'exécution d'un processus de commutation douce pour ouvrir un interrupteur dudit étage élémentaire, ce processus comportant des opérations consistant à :

  - commander la fermeture de l'autre interrupteur du même étage élémentaire, puis
  - attendre que l'intensité du courant s'annule naturellement dans l'interrupteur à ouvrir, puis
  - commander l'ouverture de l'interrupteur à ouvrir lorsque l'intensité du courant le traversant est nulle ;

- l'interrupteur à ouvrir étant formé de deux dispositifs de commutation formés chacun d'un élément de commutation commandable et d'un élément formant diode de roue libre raccordé en position antiparallèle aux bornes de l'élément de commutation commandable, ces dispositifs de commutation étant raccordés en série et tête-bêche et les éléments de commutation étant adaptés pour que, quel que soit le sens du courant traversant l'interrupteur à ouvrir, au plus un des deux éléments de commutation soit conducteur à un instant donné, le processus de commutation douce pour ouvrir l'interrupteur comporte également une opération, avant d'attendre que l'intensité du courant s'annule naturellement, consistant à commander, en fonction du sens du courant circulant dans l'interrupteur l'ouverture de l'élément de commutation de l'interrupteur à ouvrir qui n'est pas traversé par le courant ;

- l'étape d'exécution du processus de commutation douce pour ouvrir un interrupteur est réalisée uniquement lorsque la tension aux bornes de l'interrupteur à ouvrir est propre à annuler naturellement l'intensité du courant le traversant ;
- la présence de la tension propre à annuler naturellement l'intensité du courant traversant l'interrupteur à ouvrir dans l'un des circuits électriques est déterminée à partir de la loi de commande des interrupteurs commandables de l'autre circuit électrique ;
- il comporte un processus de commutation douce pour fermer un interrupteur, ce processus comportant les étapes consistant à :

    - commander au moins un autre interrupteur du même circuit électrique de manière à déclencher un processus d'annulation naturelle de la tension dans l'interrupteur à fermer, puis
    - commander la fermeture de l'interrupteur à fermer lorsque la tension aux bornes de l'interrupteur à fermer est nulle ;

- l'interrupteur à fermer étant formé d'un dispositif de commutation comportant un élément de commutation commandable adapté pour ne conduire le courant que dans un sens et un élément formant diode de roue libre raccordé en position antiparallèle aux bornes de l'élément de commutation, l'étape de commande dudit au moins un autre interrupteur du même circuit consiste à commander ledit au moins un autre interrupteur de manière à rendre conducteur ledit élément formant diode de roue libre avant de commander la fermeture de l'interrupteur ;
- l'étape d'exécution du processus de commutation douce pour fermer un interrupteur est uniquement réalisée à des instants fixés par une loi de commande en fonction d'un rapport de transformation global souhaité pour ledit ensemble ;
- chaque circuit électrique comportant une succession de cellules de commutation, chaque cellule présentant une structure de pont en H dans lequel un enroulement de transformateur est placé dans la branche intermédiaire du pont en H et quatre interrupteurs de commande du sens du courant dans cet enroulement sont respectivement placés dans chacune des branches supérieures et inférieures du pont en H, le procédé comporte l'étape de commander les interrupteurs des branches supérieures/inférieures du pont en H de chaque cellule de façon complémentaire pendant au moins 85 % du temps, le pourcentage du temps restant étant utilisé pour ménager soit un temps de recouvrement pendant lequel les interrupteurs des branches supérieures/inférieures du même pont en H sont simultanément conducteurs, soit un temps mort pendant lequel les interrupteurs des branches supérieures/inférieures du même pont en H sont simultanément non conducteurs.

L'invention a également pour objet un système de commande d'un ensemble de transformateurs indépendants magnétiquement les uns des autres, ledit ensemble comportant un premier et un second circuits électriques raccordant entre eux respectivement les enroulements primaires et secondaires des transformateurs par l'intermédiaire d'interrupteurs commandables propres à raccorder ces enroulements soit en parallèle, soit en série.

Suivant d'autres caractéristiques du système conforme à l'invention, il comporte un calculateur apte à réaliser au moins une étape d'exécution d'un processus de commutation douce pour commander la commutation d'un desdits interrupteurs commandables, ledit processus comportant une opération de commande de la commutation de l'interrupteur, à un instant où un paramètre de fonctionnement de l'interrupteur s'est naturellement annulé, ce paramètre de fonctionnement étant choisi parmi l'intensité du courant traversant l'interrupteur à commuter et la tension aux bornes de l'interrupteur à commuter.

L'invention a également pour objet un support d'enregistrement d'informations comportant des instructions pour l'exécution d'un procédé de commande d'un ensemble de transformateurs indépendants magnétiquement les uns des autres conforme à l'invention, lorsque lesdites instructions sont exécutées par un calculateur électronique.

L'invention sera mieux comprise à la lecture de la description qui va suivre, donnée uniquement à titre d'exemple, et faite en se référant aux dessins, sur lesquels :

- la figure 1 est une illustration schématique d'un ensemble de transformateurs associé à un système de commande conforme à l'invention ;
- la figure 2 est un organigramme d'un premier procédé de commande conforme à l'invention de l'ensemble de transformateurs de la figure 1 ;
- la figure 3 est un chronogramme des signaux de commande mis en oeuvre dans le procédé de la figure 2 ;
- la figure 4 est un chronogramme de deux paramètres de fonctionnement d'un interrupteur commandé à l'aide du procédé de la figure 2 ;
- la figure 5 est un organigramme d'un second procédé de commande de l'ensemble de la figure 1 conforme à l'invention ; et
- la figure 6 est un chronogramme de deux paramètres de fonctionnement d'un interrupteur commandé à l'aide du procédé de la figure 5.

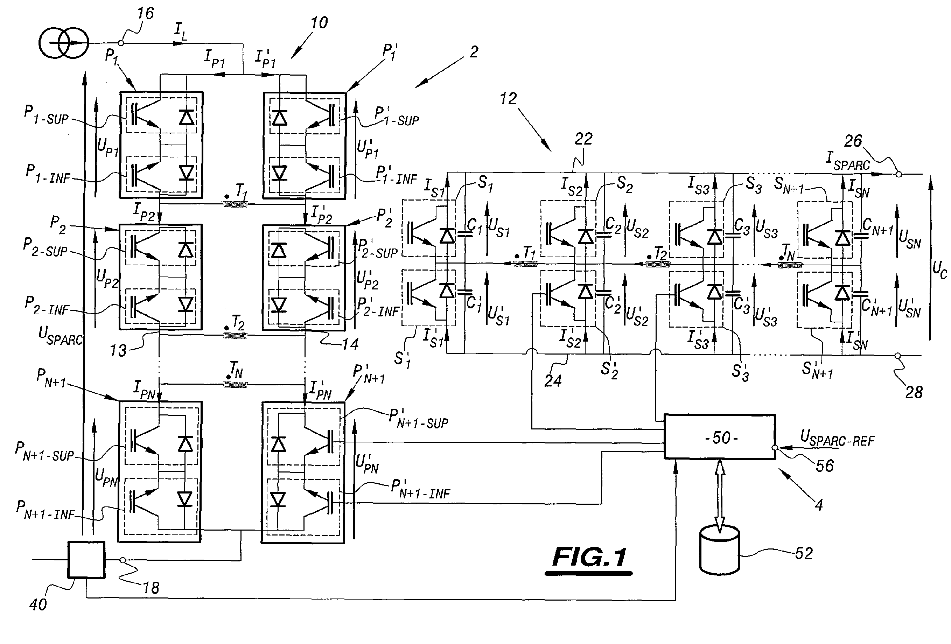

La figure 1 représente un convertisseur remplissant les fonctions d'un transformateur à rapport de transformation variable, désigné par la référence générale 2. Il est associé à un système 4 de commande des interrupteurs du transformateur 2.

Le convertisseur 2 est connu sous le terme de "convertisseur SPARC" dont la structure générale est, par exemple, divulguée dans la demande de brevet FR-A-2 820 561. Le convertisseur 2 étant connu, seuls les détails nécessaires à la compréhension du système de commande 4 seront décrits ici.

Sur la figure 1, les traits en pointillés à la place de conducteurs électriques indiquent qu'une partie du schéma électrique a été omise pour simplifier l'illustration.

Le convertisseur 2 est formé d'un ensemble de transformateurs indépendants magnétiquement les uns des autres. En cela, le convertisseur SPARC se distingue des transformateurs à rapport de transformation variable connus. Les enroulements des transformateurs sont raccordés les uns aux autres par l'intermédiaire d'interrupteurs. Ces interrupteurs sont commandables pour raccorder ces enroulements en parallèle et/ou en série, de manière à faire varier le rapport de transformation global du convertisseur SPARC.

Le rapport de transformation global du convertisseur SPARC est ici défini comme étant le rapport de la tension de sortie $U_C$ sur la tension d'entrée $U_{SPARC}$.

Le convertisseur 2 comporte ici N transformateurs notés respectivement $T_1$, $T_2$, ... $T_i$ ... $T_N$, où N est un nombre entier supérieur à 2 et, de préférence, supérieur à 10, 20 ou 30.

Le convertisseur 2 est formé d'un circuit électrique primaire 10 et d'un circuit électrique secondaire 12 isolés électriquement l'un de l'autre.

Le circuit électrique primaire 10 présente une structure générale en forme d'échelle verticale dans laquelle le deux montants verticaux sont formés par des conducteurs électriques 13 et 14 et les barreaux horizontaux sont chacun formés par un enroulement primaire d'un des transformateurs $T_i$ raccordé de part et d'autre aux conducteurs électriques 13, 14 par chacune de ses extrémités. Les N enroulements primaires des transformateurs $T_i$ sont donc raccordés en parallèle entre les conducteurs 13 et 14.

Les conducteurs 13 et 14 sont court-circuités entre eux à chacune de leurs extrémités.

Ces extrémités court-circuitées sont raccordées respectivement à des bornes d'entrée 16, 18 du convertisseur 2 entre lesquelles s'établit la tension $U_{SPARC}$.

Chaque conducteur 13, 14 porte un jeu de N+1 interrupteurs en série, chaque interrupteur étant placé entre deux points respectifs de connexion d'enroulements primaires, à l'exception des interrupteurs situés aux extrémités des conducteurs 13, 14 qui sont raccordés entre un point de connexion d'un enroulement primaire et les extrémités court-circuitées des conducteurs 13, 14.

Les N+1 interrupteurs du conducteur 13 sont notés dans l'ordre $P_1$ à $P_{N+1}$ et les N+1 interrupteurs du conducteur 14 sont notés dans l'ordre $P'_1$ à $P'_{N+1}$, l'indice 1 et l'indice N+1 désignant les interrupteurs d'extrémités.

Dans la suite de la description, on désignera par "étage élémentaire" le circuit électrique formé par deux enroulements primaires consécutifs reliés en parallèle et les deux interrupteurs placés sur les conducteurs 13, 14 entre les points de connexion de ces deux enroulements primaires.

De même, on désignera par "cellule de commutation" le pont en H sur la branche intermédiaire duquel est placé l'enroulement primaire du transformateur $T_i$ et sur les branches supérieures et inférieures duquel sont respectivement placés les interrupteurs $P_i$, $P'_i$, $P_{i+1}$ et $P'_{i+1}$.

Le circuit électrique secondaire 12 présente également une structure en forme d'échelle, mais, cette fois-ci, horizontale. Les deux montants horizontaux de l'échelle sont formés par des conducteurs 22, 24 et chaque barreau par une paire d'interrupteurs raccordés en série.

Le circuit électrique 12 comporte les enroulements secondaires des transformateurs $T_i$ raccordés en série. Chaque enroulement secondaire est raccordé entre deux barreaux consécutifs et, plus précisément, au milieu de la paire d'interrupteurs de chacun des barreaux verticaux.

Une extrémité de chacun des conducteurs 22 et 24 est raccordée respectivement à une borne de sortie 26 et une borne de sortie 28 du convertisseur 2. La tension $U_C$ s'établit entre les bornes de sortie 26 et 28.

Les N+1 interrupteurs raccordés chacun entre l'extrémité d'un enroulement secondaire et le conducteur 22 sont notés dans l'ordre respectivement $S_1$ à $S_{N+1}$.

Les N+1 interrupteurs raccordés chacun entre une extrémité d'un enroulement secondaire et le conducteur 24 sont notés dans l'ordre respectivement $S'_1$ à $S'_{N+1}$.

L'indice des interrupteurs $P_i$, $P'_i$, $S_i$, $S'_i$ correspond à celui du transformateur $T_i$ auquel ils sont associés et l'indice N+1 correspond à celui du transformateur $T_N$.

Dans la suite de la description, les interrupteurs $P_i$ et $S_i$, respectivement $P'_i$ et $S'_i$, ayant le même indice, sont dits correspondants car ils remplissent des fonctions similaires vis-à-vis chacun de leur enroulement respectif.

De façon similaire au circuit 10, le circuit 12 présente une succession de cellules de commutation formées chacune par un enroulement secondaire d'un transformateur $T_i$ et par les interrupteurs $S_i$, $S'_i$, $S_{i+1}$, $S'_{i+1}$.

De manière à ce que le convertisseur 2 soit réversible en puissance, c'est-à-dire qu'il soit capable à la fois de transmettre et de recevoir en alternance de la puissance à partir des bornes de sortie 26, 28, les interrupteurs du circuit électrique primaire sont bidirectionnels en tension et en courant et les interrupteurs du circuit électrique secondaire sont bidirectionnels uniquement en courant.

A cet effet, chaque interrupteur $P_i$ ou $P'_i$ est formé de deux dispositifs de commutation bidirectionnels en courant et monodirectionnels en tension raccordés en série tête-bêche. Ici, le dispositif de commutation bidirectionnel en courant et monodirectionnel en tension est formé par un transistor de puissance IGBT (Insulated Gate Bipolar Transistor) formant élément de commutation commandable aux bornes duquel est raccordée une diode de roue libre en position antiparallèle.

Le dispositif de commutation de chaque interrupteur $P_i$, $P'_i$ qui est traversé en premier par un courant $I_L$ entrant par la borne d'entrée 16 est référencé $P_{i-SUP}$ dans l'interrupteur $P_i$ et $P'_{i-SUP}$ dans l'interrupteur $P'_i$. L'autre dispositif de commutation de chacun des interrupteurs $P_i$ est référencé $P_{i-INF}$ pour l'interrupteur $P_i$ et $P'_{i-INF}$ pour l'interrupteur $P'_i$.

A titre d'exemple, chacun des interrupteurs $S_i$ et $S'_i$ est structurellement identique à un dispositif de commutation des interrupteurs $P_i$. Le transistor de puissance IGBT formant l'interrupteur $S_i$ a son collecteur directement raccordé au conducteur 22 et son émetteur directement raccordé entre deux enroulements secondaires. Au contraire, l'émetteur du transistor de puissance IGBT des interrupteurs $S'_i$ est raccordé directement au conducteur 24 et son collecteur est raccordé directement entre deux enroulements secondaires.

De plus, aux bornes de chaque interrupteur $S_i$ et $S'_i$ est raccordé en parallèle un condensateur respectivement noté $C_i$ et $C'_i$ pour limiter les pertes par commutation de ces interrupteurs. La capacité de ces condensateurs $C_i$ et $C'_i$ est choisie, d'une part, pour ralentir l'apparition d'une tension aux bornes de l'interrupteur lors de son ouverture et, d'autre part, pour qu'il soit capable de se charger suffisamment pour mettre en conduction l'une des diodes de roue libre.

Dans la suite de la description, les notations suivantes seront utilisées :

- $I_{Pi}$ et $I'_{Pi}$ désignent les courants traversant respectivement les interrupteurs $P_i$ et $P'_i$ orientés de la borne 16 vers la borne 18,
- $U_{Pi}$ et $U'_{Pi}$ les tensions aux bornes respectivement des interrupteurs $P_i$ et $P'_i$,
- $I_{Si}$ et $I'_{Si}$ les courants traversant respectivement les interrupteurs $S_i$ et $S'_i$ orientés de la borne de sortie 28 vers la borne de sortie 26, et
- $U_{Si}$ et $U'_{Si}$ les tensions respectivement aux bornes des interrupteurs $S_i$ et $S_i'$.

Un capteur de courant 40 est raccordé en série entre les bornes d'entrée 16 et 18 pour mesurer l'intensité du courant $I_L$ circulant de la borne 16 vers la borne 18.

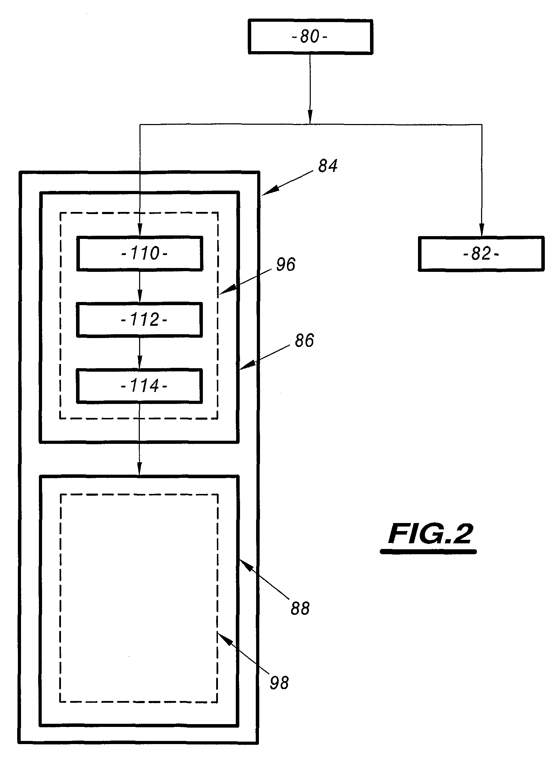

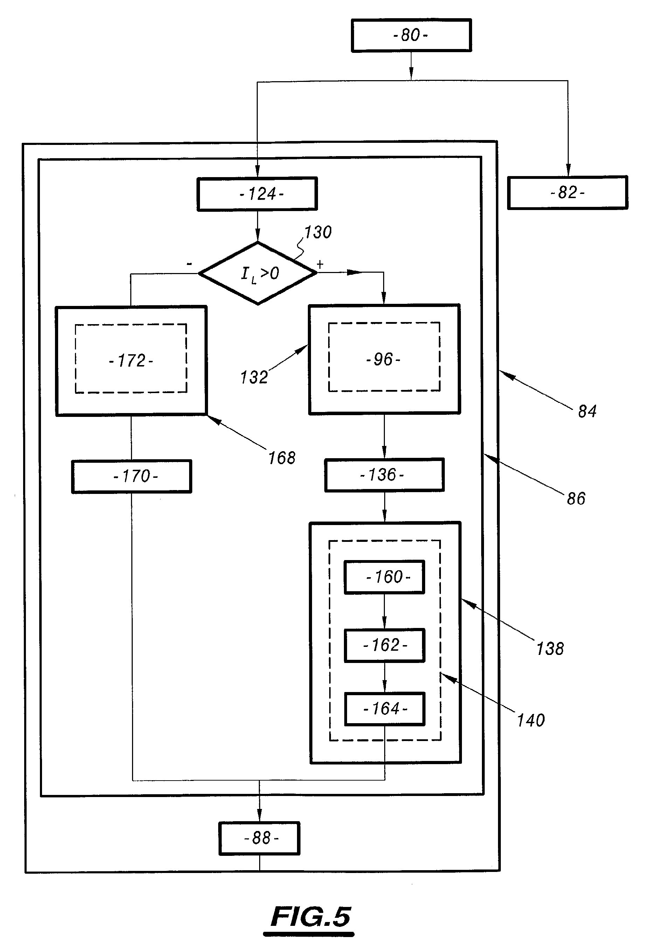

Le système de commande 4 est formé, par exemple, par un calculateur programmable 50 propre à exécuter des instructions enregistrées sur un support d'enregistrement d'informations 52. Les instructions enregistrées sur le support 52 sont réalisées et enregistrées de façon conventionnelle pour que le calculateur 50, lorsqu'il les exécute, réalise le procédé décrit en regard des figures 2 et 5.

Ici, ce calculateur 50 est raccordé à la grille de chacun des transistors de puissance des interrupteurs $P_i$, $P'_i$, $S_i$ et $S'_i$ de manière à appliquer sur celle-ci une tension de 0 V pour rendre le transistor non-passant (ouvert) et de 15 V pour rendre le transistor passant (fermé).

De manière à simplifier l'illustration de la figure 1, seules quelques unes des liaisons électriques entre les grilles des transistors de puissance et le calculateur 50 ont été représentées.

Le calculateur 50 est également raccordé au capteur de courant 40 et comporte une entrée 56 par laquelle il reçoit une consigne $U_{SPARC-REF}$ de rapport de transformation global souhaité pour le convertisseur 2.

Pour simplifier la description qui suit des procédés de commande, la tension $U_C$ transmise ou reçue entre les bornes de sortie 26, 28 est supposée continue.

Le fonctionnement du système de commande 4 va maintenant être décrit en regard des figures 2 à 6.

Ici, le procédé de commande, lorsqu'il est mis en oeuvre par le calculateur 50, permet de commander la commutation de chacun des interrupteurs du convertisseur 2 de manière à ce que ce convertisseur 2 présente un rapport de transformation global correspondant à la consigne reçue par l'entrée 56.

De plus, ici, de manière à maximiser les transferts de puissance entre les circuits 10 et 12, le calculateur 50 utilise presque uniquement les modes série du circuit 10, c'est-à-dire les configurations du circuit 10 dans lesquelles les enroulements primaires sont uniquement raccordés en série. Pour cela, les interrupteurs $P_i$ et $P'_i$, respectivement les interrupteurs $S_i$ et $S'_i$, sont commandés de façon complémentaire pendant au moins 85 % du temps et, de préférence, 90, 95 ou 98 % du temps. Par commander de façon complémentaire, on désigne le fait que, lorsque $P_i$ est non-passant, respectivement $S_i$, $P'_i$ est passant, respectivement $S'_i$, et vice-versa.

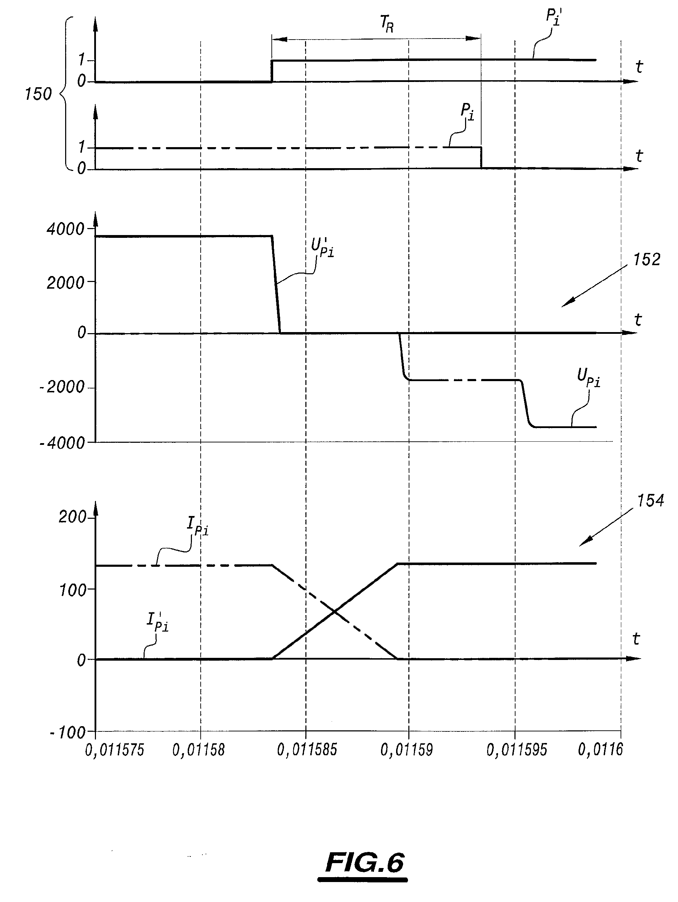

Dans le procédé de commande décrit ci-dessus, la loi de commande des interrupteurs $P_i$ et $P'_i$ se déduit de la loi de commande des interrupteurs $S_i$ et $S'_i$. Dès lors, la loi de commande des interrupteurs $S_i$ et $S'_i$ est d'abord

décrite en regard des figures 2 à 4, puis la loi de commande de l'ensemble des interrupteurs $P_i$, $P'_i$, $S_i$ et $S'_i$ est décrite en regard des figures 5 et 6.

De plus, puisque le procédé de commande privilégie les modes série, c'est-à-dire que les interrupteurs $S_i$ et $S'_i$ sont commandés, autant que possible, de façon complémentaire, il suffit de fixer la commande de l'un des interrupteurs, par exemple $S_i$, pour connaître les commandes à appliquer aux trois autres interrupteurs $S'_i$, $P_i$ et $P'_i$.

Ici, pour déterminer les instants de commutation et les temps de conduction des interrupteurs $S_i$, de manière à obtenir un rapport de transformation global pour l'ensemble 2 correspondant à la valeur de la consigne 56, le calculateur 50 met en oeuvre un procédé de commande des interrupteurs $S_i$ par modulation de largeur d'impulsions.

Ainsi, initialement, à l'étape 80 (fig. 2), chaque interrupteur $S_i$ est associé à un signal périodique de commande $D_i$. Cette association interrupteur $S_i$/signal $D_i$ est conservée pour toute une durée d'utilisation du convertisseur 2, c'est-à-dire pour un grand nombre de cycles de fonctionnement de durée $T_C$ où $T_C$ correspond à la période des signaux $D_i$.

Pour qu'une tension apparaisse aux bornes des enroulements secondaires, les signaux de commande $D_i$ de deux interrupteurs successifs $S_{i-1}$ et $S_i$ sont soit en opposition de phase, soit légèrement déphasés l'un par rapport à l'autre, mais en aucun cas en phase.

Les signaux $D_i$ sont ici, par exemple, des signaux en dents de scie variant entre -1 et +1.

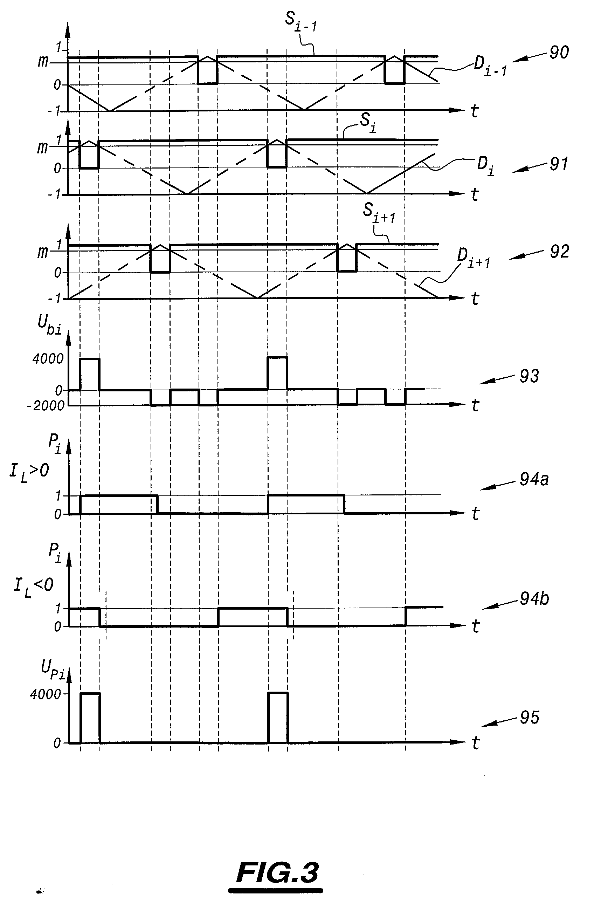

Les signaux $D_{i-1}$, $D_i$ et $D_{i+1}$ sont représentés sur des chronogrammes 90, 91, 92 de la figure 3 correspondants respectivement aux interrupteurs $S_{i-1}$, $S_i$ et $S_{i+1}$. Sur ces chronogrammes, l'état ouvert ou fermé de chaque interrupteur $S_i$ est représenté par une courbe dont la valeur est égale à 1 lorsque l'interrupteur est fermé et à 0 lorsque l'interrupteur est ouvert.

Ensuite, pendant toute la durée d'utilisation du convertisseur 2, le calculateur 50 établit, en permanence, à l'étape 82, la valeur d'un rapport cyclique $\underline{m}$ en fonction de la valeur de la consigne reçue à l'entrée 56. Cette valeur $\underline{m}$ est représentée par une ligne horizontale sur chacun des chronogrammes 90 à 92.

Simultanément, et en permanence, le calculateur 50 commande, à l'étape 84, l'ouverture et la fermeture de tous les interrupteurs du convertisseur 2.

A cet effet, pour chaque interrupteur $S_i$, le calculateur 50 déclenche une sous-étape 86 de commande de la fermeture de l'interrupteur $S_i$ dès que la valeur du signal $D_i$ est inférieure à la valeur du rapport cyclique $\underline{m}$. Inversement, dès que la valeur du signal $D_i$ est supérieure à celle du rapport cyclique $\underline{m}$, le calculateur 50 déclenche une sous-étape 88 d'ouverture de l'interrupteur $S_i$. C'est ce fonctionnement qui est représenté sur les trois chronogrammes 90 à 92.

Un quatrième chronogramme 93 de la figure 3 représente l'évolution au cours du temps d'une tension $U_{bi}$. Cette tension $U_{bi}$ est établie selon la formule suivante :

$$U_{bi} = (U_C/k)(S_{i-1} - 2S_i + S_{i+1}) \tag{1}$$

où :

- k est le rapport de transformation constant de chacun des transformateurs $T_i$, et
- $S_{i-1}$, $S_i$ et $S_{i+1}$ sont des variables booléennes représentant respectivement l'état des interrupteurs $S_{i-1}$, $S_i$ et $S_{i+1}$, ces variables ont une valeur égale à 0 lorsque l'interrupteur est ouvert et à 1 lorsque l'interrupteur est fermé.

Cette tension $U_{bi}$ permet de déduire la tension $U_{Pi}$ aux bornes de l'interrupteur $P_i$ à l'aide de la relation suivante :

$$U_{Pi} = (I - P_i)U_{bi} \tag{2}$$

où :

- $U_{Pi}$ représente la tension aux bornes de l'interrupteur $P_i$, et
- $P_i$ est une variable booléenne égale à 0 lorsque l'interrupteur $P_i$ et ouvert et à 1 lorsque $P_i$ est fermé.

Comme décrit ci-dessous en regard de la figure 5, la commande de l'interrupteur $P_i$ se déduit de la commande de l'interrupteur $S_i$. Des chronogrammes 94a et 94b de la figure 3 représentent des exemples de l'évolution au cours du temps de l'état de l'interrupteur $P_i$ respectivement dans le cas où le courant $I_L$ est supérieur à 0 et dans le cas où le courant $I_L$ est inférieur à 0. Sur ces chronogrammes 94a et 94b, une valeur égale à 1 indique que l'interrupteur $P_i$ est fermé et une valeur égale à 0 indique que l'interrupteur $P_i$ est ouvert.

L'évolution au cours du temps de la valeur de la tension $U_{Pi}$ est représentée sur un chronogramme 95 de la figure 3.

La tension d'entrée $U_{SPARC}$ se déduit des tensions $U_{Pi}$ aux bornes de chacun des interrupteurs du circuit 10 à l'aide de la relation suivante :

$$U_{SPARC} = \sum_{i=1}^{N+1} U_{Pi} \qquad (3)$$

Les relations (1), (2) et (3) données précédemment sont établies dans le cas particulier où la commande du convertisseur 2 utilise principalement les modes séries du circuit 10.

On comprend dès lors que la valeur du rapport cyclique $\underline{m}$ fixe les instants de commutation et les temps de conduction des interrupteurs $S_i$. Puisque la loi de commande des interrupteurs $P_i$ et $P'_i$ se déduit de celle des interrupteurs $S_i$ et $S'_i$, ceci fixe également les instants de commutation et le temps de conduction des interrupteurs $P_i$ et $P'_i$. Ainsi, la valeur moyenne des tensions $U_{Pi}$ sur un cycle de fonctionnement $T_C$, et donc de la tension d'entrée $U_{SPARC}$, varie en fonction de la valeur du rapport cyclique $\underline{m}$. On vérifie donc que la valeur du rapport cyclique $\underline{m}$ fixe le rapport de transformation global du convertisseur 2.

Lors de la sous-étape 86, le calculateur 50 commande également l'ouverture de l'interrupteur $S'_i$, l'ouverture de l'interrupteur $P_i$ et la fermeture de l'interrupteur $P'_i$.

A l'inverse, lors de la sous-étape 88, le calculateur 50 commande également la fermeture de l'interrupteur $S'_i$, la fermeture de l'interrupteur $P_i$ et l'ouverture de l'interrupteur $P'_i$.

Finalement, le calculateur 50 exécute systématiquement, lors de la sous-étape 86, un processus 96 de commutation douce pour fermer l'interrupteur $S_i$, et lors de la sous-étape 88, un processus 98 de commutation douce pour fermer l'interrupteur $S'_i$.

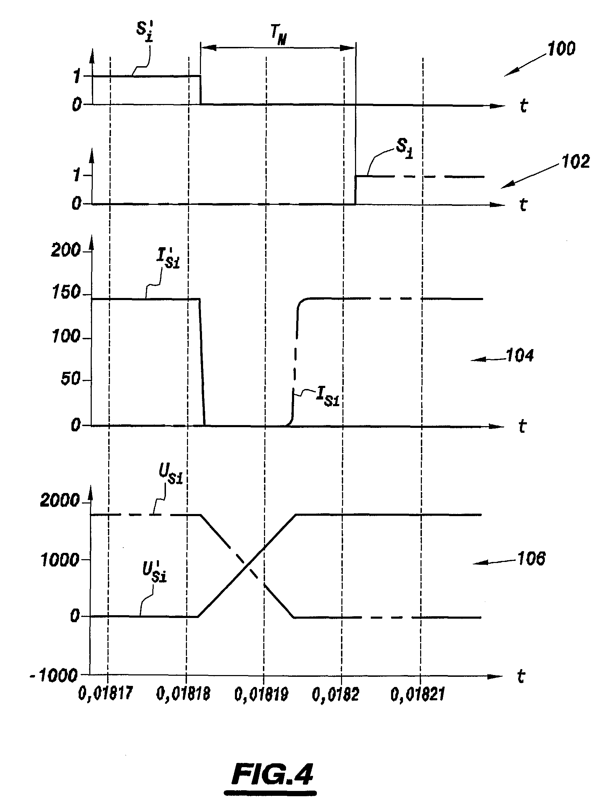

Quatre chronogrammes 100, 102, 104 et 106 sur la figure 4 représentent respectivement l'évolution au cours du temps de l'état de l'interrupteur $S'_i$, de l'état de l'interrupteur $S_i$, des courants $I'_{Si}$ et $I_{Si}$, et des tensions $U_{Si}$ et $U'_{Si}$, lors de l'exécution du processus 96.

Initialement, avant le début de l'exécution du processus 96, l'interrupteur $S'_i$ est fermé et un courant d'environ 150 A le traverse, tandis que l'interrupteur $S_i$ est ouvert et la tension $U_{Si}$ entre ses bornes a une valeur d'approximativement 1800 V. Le calculateur débute l'exécution du processus 96 en commandant, lors d'une opération 110, uniquement l'ouverture de l'interrupteur $S'_i$. Dès lors, l'intensité du courant $I'_{Si}$ décroît très rapidement pour devenir nulle. Simultanément, la tension $U'_{Si}$ commence à croître. Toutefois, la tension $U'_{Si}$ évolue au cours du temps beaucoup plus lentement que $I'_{Si}$ car le condensateur $C'_i$ ralentit les variations de la tension $U'_{Si}$. La présence du condensateur $C'_i$ limite ainsi les pertes par commutation lors de l'ouverture de l'interrupteur $S'_i$, puisque la tension $U'_{Si}$, aux bornes de l'interrupteur $S'_i$, est faible tant que le courant $I'_{Si}$ n'est pas nul.

Ensuite, le calculateur maintient, lors d'une opération 112, simultanément les interrupteurs $S_i$ et $S'_i$ ouverts pendant une durée $T_M$ qualifiée de temps mort. Ce temps mort permet de garantir que les interrupteurs $S_i$ et $S'_i$ ne sont pas simultanément fermés et évite ainsi de court-circuiter entre elles les bornes de sortie 26 et 28. Lors de cette opération 112, le condensateur $C'_i$ se charge progressivement et la tension $U'_{Si}$ croît lentement jusqu'à atteindre une valeur égale à celle de la tension $U_C$. Pendant le même temps, la tension $U_{Si}$ décroît proportionnellement à la tension $U'_{Si}$, puisque celle-ci est reliée à la tension $U'_{Si}$ par la relation suivante :

$$U_{Si} + U'_{Si} = U_C \qquad (4)$$

Dès que la valeur de la tension $U'_{Si}$ atteint la valeur $U_C$, la diode de roue libre de l'interrupteur $S_i$ se met à conduire naturellement, c'est-à-dire sans qu'aucune commande ne soit appliquée aux interrupteurs $S_i$ et $S'_i$ pendant le temps mort. Dès lors, la tension $U_{Si}$, aux bornes de l'interrupteur $S_i$, est nulle bien que celui-ci soit ouvert et le courant, à travers l'interrupteur $S_i$, s'établit uniquement par l'intermédiaire de la diode de roue libre.

La valeur de la durée $T_M$ est choisie pour que, lors de l'opération 112, la diode de roue libre de l'interrupteur $S_i$ ait le temps de devenir conductrice. Ce temps est ici déterminé par la capacité du condensateur $C'_i$ qui est, par exemple, choisie égale à 500 nF.

Dès que la durée $T_M$ s'est écoulée, le calculateur 50 commande, lors d'une opération 114, la fermeture de l'interrupteur $S_i$. La fermeture de $S_i$ intervient donc à un instant où la tension $U_{Si}$ est nulle et l'intensité $I_{Si}$ est également nulle. Les pertes par commutation sont donc également nulles.

Le processus 98 de commutation douce de la fermeture de l'interrupteur $S'_i$ est identique au processus 96 en remplaçant, pour les opérations 110 à 114, les termes "$S_i$" et "$S'_i$" respectivement par "$S'_i$" et "$S_i$". Ce processus 98

ne sera donc pas décrit plus en détail.

Sur les chronogramme 94a et 94b des commutations de $P_i$, il est possible de remarquer qu'il existe un degré de liberté sur l'instant auquel la fermeture ou l'ouverture de l'interrupteur $P_i$ est commandée. En effet, il est possible d'ouvrir l'interrupteur $P_i$ après la fermeture de l'interrupteur $S_i$ à un instant quelconque choisi, par exemple, dans la zone où la tension $U_{bi}$ est nulle. De façon similaire, il est possible de fermer l'interrupteur $P_i$ avant l'ouverture de l'interrupteur $S_i$ à un instant quelconque choisi, par exemple, dans la zone où la tension $U_{bi}$ est nulle. De telles variations, dans les instants de commande de l'interrupteur $P_i$, ne modifient pas la valeur de la tension $U_{Pi}$ obtenue.

Ce degré de liberté est utilisé dans le procédé détaillé de commande de la figure 5 pour exécuter, en plus d'un processus de commutation douce pour fermer les interrupteurs du circuit électrique secondaire 12, un processus de commutation douce pour ouvrir les interrupteurs du circuit électrique primaire 10.

Le procédé de la figure 5 est identique au procédé de la figure 2, à l'exception que le contenu des sous-étapes 86 et 88 est plus détaillé.

La sous-étape 86 consiste à commander la fermeture de l'interrupteur $S_i$, l'ouverture de l'interrupteur $S'_i$, l'ouverture de l'interrupteur $P_i$ et la fermeture de l'interrupteur $P'_i$.

Cette sous-étape 86 débute par une opération 124 d'acquisition de l'intensité du courant $I_L$ à l'aide du capteur 40.

Ensuite, lors de l'opération 130, le calculateur teste la valeur de l'intensité du courant $I_L$. Si cette intensité est strictement supérieure à 0, le calculateur procède alors immédiatement à une opération 132 de commande de la fermeture de l'interrupteur $S_i$ et de l'ouverture de l'interrupteur $S'_i$. Lors de cette opération 132, le calculateur 50 réalise la fermeture de l'interrupteur $S_i$ et l'ouverture de l'interrupteur $S'_i$ en exécutant le processus 96 décrit en regard de la figure 2.

Ensuite, le calculateur 50 attend, lors d'une opération 136, que la tension $U_{bi}$ devienne négative pour procéder à l'opération 138 de commande de l'ouverture de l'interrupteur $P_i$ et de la fermeture de l'interrupteur $P'_i$.

A cet effet, le calculateur 50 établit, si la tension $U_{bi}$ est strictement positive ou négative, par exemple, uniquement à partir de la loi de commande connue des interrupteurs $S_i$, ici, une loi de commande par modulation de largeur d'impulsions. Ainsi aucune mesure de tension n'est nécessaire.

Dès que la tension $U_{bi}$ est négative, le calculateur 50 exécute, lors d'une opération 138 de commande de l'ouverture de $P_i$ et de la fermeture de $P'_i$, un processus 140 de commutation douce pour ouvrir l'interrupteur $P_i$.

L'évolution de l'état des interrupteurs $P_i$ et $P'_i$, lors de l'exécution du processus 140, est représentée sur un chronogramme 150 de la figure 6. Sur cette figure 6 sont également représentés un chronogramme 152 de l'évolution, au cours du processus 140, des tensions $U_{Pi}$ et $U'_{Pi}$, ainsi qu'un chronogramme 154 de l'évolution au cours du processus des intensités $I'_{Pi}$ et $I_{Pi}$.

Avant d'exécuter le processus 140, l'interrupteur $P_i$ est fermé et l'interrupteur $P'_i$ est ouvert. Le courant $I_{Pi}$ est égal à environ 130 A et la tension $U'_{Pi}$ à 3600 V. Le courant $I_{Pi}$ est positif car le courant $I_L$ est positif.

Le processus 140 débute alors par une opération 160 de commande de la fermeture de l'interrupteur $P'_i$. A cet effet, le calculateur commande simultanément la fermeture du dispositif de commutation $P'_{i-SUP}$ et $P'_{i-INF}$.

Lors de cette opération 160, le calculateur 50 commande également l'ouverture du dispositif de commutation $P_{i-INF}$. Cette commande de l'ouverture du dispositif de commutation $P_{i-INF}$ n'entraîne aucune perte par commutation. En effet, l'intensité du courant $I_{Pi}$ est positive à l'instant où l'ouverture du dispositif de commutation $P_{i-INF}$ est commandée, ce qui signifie que le courant circule uniquement dans sa diode de roue libre. Dès lors, cette commutation est réalisée à un instant où aucun courant ne traverse le transistor IGBT du dispositif de commutation $P_{i-INF}$.

Ensuite, lors d'une opération 162, le calculateur 50 maintient les interrupteurs $P_i$ et $P'_i$ dans cet état pendant une durée $T_R$ appelée temps de recouvrement.

Au début de ce temps de recouvrement, la tension $U'_{Pi}$ chute brusquement à cause de la fermeture de l'interrupteur $P'_i$. Ensuite, l'amplitude de l'intensité du courant $I_{Pi}$, circulant par l'intermédiaire du transistor IGBT du dispositif de commutation $P_{i-SUP}$ et de la diode de roue libre du dispositif de commutation $P_{i-INF}$, diminue et s'annule naturellement à cause du fait que la tension $U_{bi}$ est négative. Dès lors, l'intensité du courant $I_{Pi}$ reste nulle bien que le transistor IGBT de $P_{i-SUP}$ soit dans l'état passant, puisqu'il ne peut pas changer de sens à cause du fait que le transistor IGBT du dispositif de commutation $P_{i-INF}$ est ouvert.

La durée du temps de recouvrement $T_R$ est choisie supérieure au temps nécessaire pour que l'intensité du courant $I_{Pi}$ s'annule. Pendant ce temps de recouvrement, aucune commande n'est appliquée aux interrupteurs $P_i$, $P'_i$.

Lors de cette opération 162, les interrupteurs $P_i$ et $P'_i$ sont simultanément conducteurs, ce qui garantit une commutation des interrupteurs $P_i$ et $P'_i$ sans interrompre la circulation du courant $I_L$.

Lorsque la durée $T_R$ s'est écoulée, le calculateur procède immédiatement à l'opération 164 de commande de l'ouverture du dispositif de commutation $P_{i-SUP}$. L'ouverture du dispositif de commutation $P_{i-SUP}$ s'effectue alors à courant $I_{Pi}$ nul, de sorte que les pertes par commutation sont également nulles.

Le processus 140 de commande par commutation douce de l'ouverture de l'interrupteur $P_i$ se termine alors et le calculateur procède à la sous-étape 88.

Sur le chronogramme 94a, le retard de l'ouverture de l'interrupteur $P_i$, par rapport à l'instant où la tension $U_{bi}$ devient négative, a été amplifié à titre d'illustration. Dans la réalité, ce retard est faible par rapport au temps d'ouverture des interrupteurs $S_i$.

Si, lors de l'opération 130, l'intensité du courant $I_L$ est strictement négative, le calculateur 50 procède alors à une opération 168 d'ouverture de l'interrupteur $P_i$ et de fermeture de l'interrupteur $P'_i$ avant de réaliser une opération 170 de commande de la fermeture de l'interrupteur $S_i$ et de l'ouverture de l'interrupteur $S'_i$.

Lors de l'opération 168, le calculateur exécute également un processus 172 de commutation douce pour ouvrir l'interrupteur $P_i$. Ce processus 172 est exécuté dans des conditions où l'intensité du courant $I_L$ est négative et où la tension $U_{bi}$ est positive, puisque le calculateur n'a pas encore procédé à l'opération 170 de fermeture de l'interrupteur $S_i$ et d'ouverture de l'interrupteur $S'_i$. Dès lors, ce processus 172 est identique au processus 140 de l'opération 138 en remplaçant les termes "$P_{i-INF}$" et "$P_{i-SUP}$" respectivement par "$P_{i-SUP}$" et "$P_{i-INF}$".

L'opération 170 est, par exemple, identique à l'opération 132.

A l'issue de l'opération 170, le calculateur procède à la sous-étape 88.

Sur le chronogramme 94b, la ligne verticale en pointillés représentant l'instant de fermeture de l'interrupteur $S_i$, est décalée par rapport à l'instant théorique de fermeture de l'interrupteur $S_i$ déterminé uniquement à l'aide de la loi de commande par modulation de largeur d'impulsions (représenté sur le chronogramme 91). Ce décalage représente le retard introduit pour commander d'abord l'ouverture de l'interrupteur $P_i$ avant la fermeture de l'interrupteur $S_i$. Sur le chronogramme 94b, ce décalage est très nettement amplifié à titre d'illustration. Dans la réalité, ce décalage est faible par rapport au temps d'ouverture des interrupteurs $S_i$.

Lors de la sous-étape 88, le calculateur 50 commande l'ouverture de l'interrupteur $S_i$, la fermeture de l'interrupteur $S'_i$, la fermeture de l'interrupteur $P_i$ et l'ouverture de l'interrupteur $P'_i$. Lors de cette sous-étape 88, le calculateur exécute des processus de commutation douce pour fermer l'interrupteur $S'_i$ et pour ouvrir l'interrupteur $P'_i$. Les processus de commutation douce sont identiques à ceux décrits pour la sous-étape 86 à l'exception du fait que les commandes appliquées aux interrupteurs $S_i$ et $P_i$ sont remplacées par des commandes correspondantes appliquées aux interrupteurs $S'_i$ et $P'_i$. Dès lors, les opérations réalisées lors de la sous-étape 88 sont identiques à celles réalisées lors de la sous-étape 86. Le détail de ces opérations ne sera donc pas décrit ici.

Finalement, dans le procédé de commande des figures 2 et 5, la durée du temps mort $T_M$ et la durée du temps de recouvrement $T_R$ sont choisies aussi petites que possible, de manière à ce que les interrupteurs $P_i$ et $P'_i$, respectivement $S_i$ et $S'_i$, soient dans des états complémentaires pendant 98 % du temps d'utilisation du convertisseur 2.

Il est intéressant de remarquer que, dans le procédé de commande de la figure 5, le processus de commutation douce pour ouvrir l'interrupteur $P_i$ est avancé ou retardé dans le temps pour être placé à un instant où la valeur de la tension $U_{bi}$ permet d'annuler naturellement l'intensité dans l'interrupteur $P_i$. Dans l'exemple décrit ici, l'ouverture de $P_i$ est retardée par rapport à la fermeture de $S_i$ si le courant $I_L$ est positif, et la fermeture de $S_i$ est retardée pour être réalisée après l'ouverture de $P_i$ si le courant $I_L$ est négatif.

De plus, ici, à l'instant où le signal $D_i$ devient supérieur à la valeur du rapport cyclique $\underline{m}$ et si l'intensité du courant $I_L$ est supérieure à 0, le calculateur commande à cet instant la fermeture de l'interrupteur $S_i$, alors que si l'intensité du courant $I_L$ est négative, le calculateur commande à cet instant l'ouverture de l'interrupteur $P_i$. Lorsque l'intensité du courant $I_L$ est négative, le calculateur retarde légèrement la fermeture de l'interrupteur $S_i$ par rapport à l'instant théorique déterminé à partir de la loi de commande par modulation de largeur d'impulsions. On comprend donc que la commande par modulation de largeur d'impulsions fixe des instants théoriques de commutation propre à permettre l'obtention d'un rapport de transformation donné. Ensuite, le calculateur décale légèrement les instants de commutation réelle des interrupteurs $P_i$, $P'_i$, $S_i$ et $S'_i$, par rapport à ces instants théoriques pour soit maintenir des conditions de fonctionnement du convertisseur propre à permettre l'exécution d'un processus de commutation douce (par exemple maintien de la tension $U_{Pi}$ supérieure à 0 en exécutant d'abord l'ouverture de l'interrupteur $P_i$ lors de l'opération 168 puis la fermeture de l'interrupteur $S_i$ lors de l'opération 170) soit d'attendre que les conditions de fonctionnement du convertisseur permettent l'exécution d'un tel processus (ici, par exemple, attendre que la tension $U_{bi}$ soit négative à l'étape 136).

Le processus de commutation douce des interrupteurs du circuit électrique primaire a été décrit ici dans le cas particulier où un procédé de commande par modulation de largeur d'impulsions a été mis en oeuvre pour commander les interrupteurs du circuit électrique secondaire. Toutefois, en variante, le processus de commutation douce, pour ouvrir un interrupteur du circuit électrique primaire décrit ici, est propre à être mis en oeuvre avec d'autres procédés de commande des interrupteurs $S_i$ et $S'_i$.

Bien que le procédé de commande préféré soit celui décrit en regard de la figure 5, il est possible d'exécuter des processus de commutation douce uniquement pour les interrupteurs $P_i$ et $P'_i$, respectivement $S_i$ et $S'_i$, sans mettre en oeuvre de processus de commutation douce pour les interrupteurs $S_i$ et $S'_i$. respectivement $P_i$ et $P'_i$.

# EP 1 422 816 A1

**Revendications**

1. Procédé de commande d'un ensemble (2) de transformateurs ($T_i$) indépendants magnétiquement les uns des autres, ledit ensemble (2) comportant un premier et un second circuits électriques (10, 12) raccordant entre eux respectivement les enroulements primaires et secondaires des transformateurs ($T_i$) par l'intermédiaire d'interrupteurs commandables ($P_i$, $P'_i$, $S_i$, $S'$;) propres à raccorder ces enroulements soit en parallèle, soit en série,
   **caractérisé en ce qu'**il comporte au moins une étape (132, 138, 168, 170) d'exécution d'un processus (96, 98, 140, 172) de commutation douce pour commander la commutation d'un desdits interrupteurs commandables, ledit processus comportant une opération de commande de la commutation de l'interrupteur, à un instant où un paramètre de fonctionnement de l'interrupteur s'est naturellement annulé, ce paramètre de fonctionnement étant choisi parmi l'intensité du courant traversant l'interrupteur à commuter et la tension aux bornes de l'interrupteur à commuter.

2. Procédé selon la revendication 1, **caractérisé en ce que** ladite au moins une étape (132, 138, 168, 170) d'exécution d'un processus de commutation douce est uniquement réalisée à un instant où les conditions de fonctionnement dudit ensemble (2) sont propres à permettre une annulation naturelle du paramètre de fonctionnement de l'interrupteur à commuter.

3. Procédé selon la revendication 2, **caractérisé en ce que** le processus (96, 140) de commutation douce comporte une opération (110, 160) consistant à commander au moins un autre interrupteur que celui à commuter de manière à déclencher un processus d'annulation naturelle du paramètre de fonctionnement de l'interrupteur à commuter.

4. Procédé selon l'une quelconque des revendications précédentes, **caractérisé en ce qu'**au moins l'un des circuits électriques (10) comportant un étage élémentaire formé par un circuit électrique fermé dans lequel sont placés, dans l'ordre, un premier enroulement, un premier interrupteur commandable, un second enroulement, et un second interrupteur commandable, le procédé comporte une étape (138, 168) d'exécution d'un processus (140, 172) de commutation douce pour ouvrir un interrupteur ($P_i$, $P'_i$) dudit étage élémentaire, ce processus comportant des opérations consistant à :

   - commander (en 160) la fermeture de l'autre interrupteur du même étage élémentaire, puis
   - attendre (en 162) que l'intensité du courant s'annule naturellement dans l'interrupteur à ouvrir, puis
   - commander (en 164) l'ouverture de l'interrupteur à ouvrir lorsque l'intensité du courant le traversant est nulle.

5. Procédé selon la revendication 4, **caractérisé en ce que** l'interrupteur à ouvrir étant formé de deux dispositifs de commutation ($P_{i-SUP}$, $P_{i-INF}$) formés chacun d'un élément de commutation commandable et d'un élément formant diode de roue libre raccordé en position antiparallèle aux bornes de l'élément de commutation commandable, ces dispositifs de commutation ($P_{i-SUP}$, $P_{i-INF}$) étant raccordés en série et tête-bêche et les éléments de commutation étant adaptés pour que, quel que soit le sens du courant traversant l'interrupteur à ouvrir, au plus un des deux éléments de commutation soit conducteur à un instant donné, le processus de commutation douce (140, 172) pour ouvrir l'interrupteur comporte également une opération (160), avant d'attendre que l'intensité du courant s'annule naturellement, consistant à commander, en fonction du sens du courant circulant dans l'interrupteur ($P_i$), l'ouverture de l'élément de commutation de l'interrupteur à ouvrir qui n'est pas traversé par le courant.

6. Procédé selon la revendication 4 ou 5, **caractérisé en ce que** l'étape (138, 168) d'exécution du processus (140, 170) de commutation douce pour ouvrir un interrupteur est réalisée uniquement lorsque la tension aux bornes de l'interrupteur à ouvrir est propre à annuler naturellement l'intensité du courant le traversant.

7. Procédé selon la revendication 6, **caractérisé en ce que** la présence de la tension propre à annuler naturellement l'intensité du courant traversant l'interrupteur à ouvrir dans l'un des circuits électriques (10) est déterminée (en 162) à partir de la loi de commande des interrupteurs commandables de l'autre circuit électrique (12).

8. Procédé selon l'une quelconque des revendications précédentes, **caractérisé en ce qu'**il comporte un processus (96, 98) de commutation douce pour fermer un interrupteur, ce processus comportant les étapes consistant à :

   - commander (en 110) au moins un autre interrupteur du même circuit électrique (10, 12) de manière à déclencher un processus d'annulation naturelle de la tension dans l'interrupteur à fermer, puis
   - commander (en 114) la fermeture de l'interrupteur à fermer lorsque la tension aux bornes de l'interrupteur à fermer est nulle.

**9.** Procédé selon la revendication 8, **caractérisé en ce que** l'interrupteur à fermer étant formé d'un dispositif de commutation comportant un élément de commutation commandable adapté pour ne conduire le courant que dans un sens et un élément formant diode de roue libre raccordé en position antiparallèle aux bornes de l'élément de commutation, l'étape de commande dudit au moins un autre interrupteur du même circuit (10, 12) consiste à commander ledit au moins un autre interrupteur de manière à rendre conducteur ledit élément formant diode de roue libre avant de commander la fermeture de l'interrupteur.

**10.** Procédé selon la revendication 8 ou 9, **caractérisé en ce que** l'étape d'exécution du processus (96) de commutation douce pour fermer un interrupteur est uniquement réalisée à des instants fixés par une loi de commande en fonction d'un rapport de transformation global souhaité pour ledit ensemble (2).

**11.** Procédé selon l'une quelconque des revendications précédentes, **caractérisé en ce que** chaque circuit électrique (10, 12) comportant une succession de cellules de commutation, chaque cellule présentant une structure de pont en H dans lequel un enroulement de transformateur est placé dans la branche intermédiaire du pont en H et quatre interrupteurs de commande du sens du courant dans cet enroulement sont respectivement placés dans chacune des branches supérieures et inférieures du pont en H, le procédé comporte l'étape (84) de commander les interrupteurs des branches supérieures/inférieures du pont en H de chaque cellule de façon complémentaire pendant au moins 85 % du temps, le pourcentage du temps restant étant utilisé pour ménager soit un temps de recouvrement pendant lequel les interrupteurs des branches supérieures/inférieures du même pont en H sont simultanément conducteurs, soit un temps mort pendant lequel les interrupteurs des branches supérieures/inférieures du même pont en H sont simultanément non conducteurs.

**12.** Système de commande d'un ensemble (2) de transformateurs ($T_i$) indépendants magnétiquement les uns des autres, ledit ensemble (2) comportant un premier et un second circuits électriques (10, 12) raccordant entre eux respectivement les enroulements primaires et secondaires des transformateurs ($T_i$) par l'intermédiaire d'interrupteurs commandables ($P_i$, $P'_i$, $S_i$, $S'_i$) propres à raccorder ces enroulements soit en parallèle, soit en série,
   **caractérisé en ce qu'**il comporte un calculateur (50) apte à réaliser au moins une étape (132, 138, 168, 170) d'exécution d'un processus (96, 98, 140, 172) de commutation douce pour commander la commutation d'un desdits interrupteurs commandables, ledit processus comportant une opération de commande de là commutation de l'interrupteur, à un instant où un paramètre de fonctionnement de l'interrupteur s'est naturellement annulé, ce paramètre de fonctionnement étant choisi parmi l'intensité du courant traversant l'interrupteur à commuter et la tension aux bornes de l'interrupteur à commuter.

**13.** Support (52) d'enregistrement d'informations comportant des instructions pour l'exécution d'un procédé de commande d'un ensemble (2) de transformateurs indépendants magnétiquement les uns des autres, conforme à l'une quelconque des revendications 1 à 11, lorsque lesdites instructions sont exécutées par un calculateur électronique (50).

**14.** Système de conversion d'énergie électrique, comportant :

- un ensemble (2) de transformateurs ($T_i$) indépendants magnétiquement les uns des autres, ledit ensemble comportant :

   - un premier et un second circuits électriques (10, 12) raccordant entre eux respectivement les enroulements primaire et secondaire des transformateurs ($T_i$), et
   - des interrupteurs commandables ($P_i$, $P'_i$, $S_i$ et $S'_i$) propres à raccorder ces enroulements soit en parallèle, soit en série, et
   - un système de commande de cet ensemble (2),

   **caractérisé :**

   - **en ce que** le système de commande est conforme à la revendication 12, et
   - **en ce que** l'ensemble (2) comporte des condensateurs raccordés en parallèle aux bornes des interrupteurs d'au moins un desdits circuits électriques (10, 12) pour limiter les pertes par commutation.

**15.** Système selon la revendication 14, **caractérisé en ce que** chaque circuit électrique (10, 12) comporte une succession de cellules de commutation, chaque cellule présentant une structure de pont en H dans lequel un enroulement de transformateur est placé dans la branche intermédiaire du pont en H et quatre interrupteurs commandables pour déterminer le sens du courant dans cet enroulement sont respectivement placés dans chacune des branches supérieure et inférieure du pont en H.

**FIG.1**

_**FIG.2**_

**FIG.3**

**FIG.4**

## FIG.5

**FIG.6**

# EP 1 422 816 A1

Office européen  
des brevets

**RAPPORT DE RECHERCHE EUROPEENNE**

Numéro de la demande

EP 03 35 6186

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2002/024824 A1 (REINOLD HARRY) 28 février 2002 (2002-02-28) | 1 | H02M3/335 |
| A | * abrégé; figure 1 * | 2,8,11, 12 | |
| | * page 2, alinéa 27 * <br> --- | | |
| A | PINHEIRO J R ET AL: "Isolated interleaved-phase-shift-PWM de-dc ZVs converters" IEEE, vol. 4, 8 octobre 2000 (2000-10-08), pages 2383-2388, XP010522589 * le document en entier * <br> --- | 1,12 | |
| A | OLIVEIRA D S ET AL: "A lossless commutation PWM two level forward converter" IEEE, 10 septembre 2000 (2000-09-10), pages 582-588, XP010523244 * le document en entier * <br> --- | 1,12 | DOMAINES TECHNIQUES RECHERCHES (Int.Cl.7) |
| A,D | FR 2 820 561 A (FAIVELEY TRANSP) 9 août 2002 (2002-08-09) * le document en entier * <br> ----- | 1,12 | H02M |

Le présent rapport a été établi pour toutes les revendications

| Lieu de la recherche | Date d'achèvement de la recherche | Examinateur |
|---|---|---|
| LA HAYE | 16 mars 2004 | Thisse, S |

CATEGORIE DES DOCUMENTS CITES

X : particulièrement pertinent à lui seul  
Y : particulièrement pertinent en combinaison avec un autre document de la même catégorie  
A : arrière-plan technologique  
O : divulgation non-écrite  
P : document intercalaire

T : théorie ou principe à la base de l'invention  
E : document de brevet antérieur, mais publié à la date de dépôt ou après cette date  
D : cité dans la demande  
L : cité pour d'autres raisons  

........................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 35 6186

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-03-2004

| Document brevet cité au rapport de recherche | Date de publication | Membre(s) de la famille de brevet(s) | | Date de publication |
|---|---|---|---|---|
| US 2002024824 A1 | 28-02-2002 | DE | 10038814 A1 | 21-02-2002 |
| | | EP | 1184963 A2 | 06-03-2002 |
| | | JP | 2002125374 A | 26-04-2002 |
| FR 2820561 A | 09-08-2002 | FR | 2820561 A1 | 09-08-2002 |
| | | BR | 0200298 A | 29-10-2002 |
| | | CA | 2370074 A1 | 05-08-2002 |
| | | CN | 1374741 A | 16-10-2002 |
| | | EP | 1231704 A2 | 14-08-2002 |
| | | FR | 2820562 A1 | 09-08-2002 |
| | | JP | 2002315344 A | 25-10-2002 |
| | | US | 2002126511 A1 | 12-09-2002 |

EPO FORM P0460

Pour tout renseignement concernant cette annexe : voir Journal Officiel de l'Office européen des brevets, No. 12/82